# EUROPEAN PATENT APPLICATION

(11) **EP 2 562 594 A2**
(43) Date of publication of application: **27.02.2013**
(21) Application number: 12163991.8
(22) Date of filing: 12.04.2012
(51) Int. Cl.: G02F 1/1339

(54) **Display apparatus and method for manufacturing the same**

(30) Priority: 22.08.2011 KR 20110083523
(71) Applicant: Samsung Display Co., Ltd., Yongin-City, Gyeonggi-Do, 446-711 (KR)
(72) Inventor: Kim, Hyun-Young, Chungcheongnam-do (KR); Kim, Min-Chang, Chungcheongnam-do (KR)
(74) Representative: Walaski, Jan Filip

(57) **Abstract**

A display apparatus, includes a first display panel, a second display panel disposed opposite the first display panel, the second display panel including one surface having a first region and a second region, the second region surrounding the first region; one or more first spacers in the first region and the second region of the second display panel, the one or more first spacers being in contact with the first display panel; and one or more second spacers in at least one of the first region and the second region of the second display panel, the one or more second spacers being spaced apart from the first display panel, wherein a sum of cross sectional areas of the second spacers in the second region is smaller than a sum of cross sectional areas of second spacers in the first region or is zero.

## Description

The disclosed technology relates to a display apparatus and a method for manufacturing the same, and more specifically, to a display apparatus including a spacer and a method for manufacturing the same.

In general, a display apparatus, more particularly, a liquid crystal display apparatus, is formed into a structure which includes a thin film transistor (TFT) substrate formed with a driving TFT, a colour filter substrate formed with a colour filter layer and a liquid crystal layer between them.

In this display apparatus, a spacer is being used to maintain a cell gap, which is a space between a colour filter substrate and a TFT substrate. A spacer may be a spherical ball spacer formed by scattering or a column spacer formed in a colour filter substrate or a TFT substrate.

According to an aspect of the invention, there is provided a display apparatus including a first display panel, a second display panel disposed opposite the first display panel, the second display panel including a surface having a first region and a second region, the second region surrounding the first region, one or more first spacers in the first region and the second region of the second display panel, the one or more first spacers being in contact with the first display panel, and one or more second spacers in the first region and optionally in the second region of the second display panel, the one or more second spacers being spaced apart from the first display panel, wherein a sum of cross sectional areas of the second spacers on the second region is smaller than a sum of cross sectional areas of the second spacers in the first region or is zero.

The second display panel may include a black matrix on a part of the surface of the second display panel in the first region and on a whole of the surface of the second display panel in the second region, a colour filter on the surface of the second display panel and on the black matrix, and a coating layer on the colour filter. The first spacers and the second spacers may be between the coating layer and the first display panel.

A sum of cross sectional areas of the first spacers in the first region may be equal to a sum of cross sectional areas of the first spacers in the second region. The sum of the cross sectional areas of the first spacers in the first region may be less than 4% of a total area of the surface of the second display panel. A sum of cross sectional areas of the first spacers in the second region may be smaller than a sum of cross sectional areas of the first spacers in the first region. The sum of the cross sectional areas of the first spacers in the first region may be less than 4% of a total area of the surface of the second display panel. The sum of the cross sectional areas of the first spacers in the first region may be 0.1% of the total area of the surface of the second display panel. The sum of the cross sectional areas of the first spacers in the second region may be 0.05% of the total area of the surface of the second display panel. The sum of the cross sectional areas of the second spacers in the first region may be less than 7% of a total area of the surface of the second display panel.

According to another aspect of the invention, there is provided a display apparatus, including a first display panel, a second display panel disposed opposite the first display panel, the second display panel including a surface having a first region and a second region, the second region surrounding the first region, one or more first spacers in the first region and optionally in the second region of the second display panel, the one or more first spacers being in contact with the first display panel, and one or more second spacers in the first region and the second region of the second display panel, the one or more second spacers being spaced apart from the first display panel, wherein a sum of cross sectional areas of the first spacers in the second region is smaller than a sum of cross sectional areas of the first spacers in the first region or is zero.

The second display panel may include a black matrix on a part of the surface of the second display panel in the first region and on a whole of the surface of the second display panel in the second region, a colour filter on the surface of the second display panel and on the black matrix, and a coating layer on the colour filter. The first spacers and the second spacers may be between the coating layer and the first display panel.

The sum of the cross sectional areas of the first spacers in the second region may be zero. A sum of cross sectional areas of the second spacers in the first region may be equal to a sum of cross sectional areas of the second spacers in the second region. The sum of the cross sectional areas of the second spacers in the first region may be less than 7% of a total area of the surface of the second display panel. The sum of the cross sectional areas of the second spacers in the second region may be smaller than the sum of the cross sectional areas of the second spacers in the first region. The sum of the cross sectional areas of the second spacers in the first region may be less than 7% of a total area of the surface of the second display panel. The sum of the cross sectional areas of the second spacers in the first region may be 3.9% of a total area of the surface of the second display panel. The sum of the cross sectional areas of the second spacers in the second region may be 2% of a total area of the surface of the second display panel. The sum of the cross sectional areas of the first spacers in the first region may be less than 4% of a total area of the surface of the second display panel.

According to a further aspect of the invention, there is provided a display apparatus including a first display panel, a second display panel opposite the first display panel, the second display panel including a surface having a first region and a second region, the second region surrounding the first region, one or more first spacers in the first region and the second region of the second display panel, the one or more first spacers being in contact with the first display panel, and one or more second spacers in the first region and the second region of the second display panel, the one or more second spacers being spaced apart from the first display panel, wherein a sum of cross sectional areas of the first spacers in the second region is smaller than a sum of cross sectional areas of the first spacers in the first region, and a sum of cross sectional areas of the second spacers in the second region is smaller than a sum of cross sectional areas of the second spacers in the first region.

The second display panel may include a black matrix on a part of the surface of the second display panel in the first region and on a whole of the surface of the second display panel in the second region, a colour filter on the surface of the second display panel and on the black matrix, and a coating layer on the colour filter, wherein the first spacers and the second spacers are between the coating layer and the first display panel. The sum of the cross sectional areas of the first spacers in the first region may be less than 4% of a total area of the surface of the second display panel. The sum of the cross sectional areas of the first spacers in the first region may be 0.1% of the total area of the surface of the second display panel. The sum of the cross sectional areas of the first spacers in the second region may be 0.05% of the total area of the surface of the second display panel. The sum of the cross sectional areas of the second spacers in the first region may be less than 7% of a total area of the surface of the second display panel. The sum of the cross sectional areas of the second spacers in the first region may be 3.9% of the total area of the surface of the second display panel. The sum of the cross sectional areas of the second spacers in the second region may be 2% of the total area of the surface of the second display panel.

According to a still further aspect of the invention, there is provided a display apparatus including a first display panel, a second display panel opposite the first display panel, the second display panel including a surface having a first region and a second region, the second region surrounding the first region, one or more first spacers in the first region and the second region of the second display panel, and one or more second spacers in the first region and the second region of the second display panel, a critical pressure value of the second spacers being greater than a critical pressure value of the first spacers, the critical pressure value being a point at which a spacer starts receiving actual pressure when pressure is applied from the first display panel or the second display panel, wherein a sum of cross sectional areas of the first spacers in the second region is smaller than a sum of cross sectional areas of the first spacers in the first region, and a sum of cross sectional areas of the second spacers in the second region is smaller than a sum of cross sectional areas of the second spacers in the first region.

The second display panel may include a black matrix on a part of the surface of the second display panel in the first region and on a whole of the surface of the second display panel in the second region, a colour filter on the surface of the second display panel and on the black matrix, and a coating layer on the colour filter, wherein the first spacers and the second spacers are between the coating layer and the first display panel.

According to a yet further aspect of the invention, there is provided a display apparatus, including a first display panel, a second display panel opposite the first display panel, the second display panel including a surface having a first region and a second region, the second region surrounding the first region, one or more first spacers in the first region and the second region of the second display panel, the one or more first spacers including an end opposite to the surface of the second display panel, the end being in contact with the first display panel, and one or more second spacers in the first region and the second region of the second display panel, the one or more second spacers including an end opposite to the surface of the second display panel, the end being spaced apart from the first display panel, wherein a height of the one or more second spacers in the second region is less than a height of the second spacer in the first region

A distance between the end of the one or more second spacers in the second region and the first display panel may be greater than a distance between the end of the one or more second spacers in the first region and the first display panel. The second display panel may include a black matrix on a part of the surface of the second display panel in the first region and on a whole of the surface of the second display panel in the second region, a colour filter on the surface of the second display panel and on the black matrix, and a coating layer on the colour filter, wherein the first spacers and the second spacers are between the coating layer and the first display panel.

According to a still further aspect of the invention, there is provided a method for manufacturing a display apparatus, the method including providing a first display panel, disposing a second display panel opposite the first display panel, the second display panel including a surface having a first region and a second region, the second region surrounding the first region, and forming one or more first spacers in contact with the first display panel in the first region and the second region of the second display panel, and one or more second spacers spaced apart from the first display panel in the first region and the second region of the second display panel, wherein the forming of the first spacers and the second spacers includes applying a photosensitive layer on the one surface of the second display panel, exposing the photosensitive layer by using a half-tone mask that has different penetration rates for the first region and the second region, and removing a portion of the photosensitive layer following the exposure.

The photosensitive layer may include a negative-type photosensitive substance. A penetration rate of the half-tone mask for the first region may be greater than a penetration rate of the half-tone mask for the second region. The penetration rate of the half-tone mask for the first region may be 35%, and the penetration rate of the half-tone mask for the second region may be 30%. The photosensitive layer may include a positive-type photosensitive substance. A penetration rate of the half-tone mask for the first region may be less than a penetration rate of the half-tone mask for the second region.

The above and other features will become more apparent to those of ordinary skill in the art by describing in detail exemplary embodiments with reference to the attached drawings, in which:
FIG. 1 illustrates a plan view of a display apparatus according to an exemplary embodiment.
FIG. 2 illustrates a sectional view of a display apparatus according to an exemplary embodiment.
FIG. 3 illustrates a plan view of a display apparatus according to an exemplary embodiment.
FIG. 4 illustrates a plan view of a display apparatus according to another exemplary embodiment.
FIG. 5 illustrates a sectional view of a display apparatus according to another exemplary embodiment.
FIGS. 6 to 8 illustrate plan views of a display apparatus according to various exemplary embodiments.
FIG. 9 illustrates a plan view of a display apparatus according to another exemplary embodiment.
FIG. 10 illustrates a sectional view of a display apparatus according to another exemplary embodiment.
FIG. 11 illustrates a plan view of a display apparatus according to another exemplary embodiment.
FIG. 12 illustrates a plan view of a display apparatus according to another exemplary embodiment.
FIG. 13 illustrates a sectional view of a display apparatus according to another exemplary embodiment.
FIGS. 14 to 16 illustrate plan views of a display apparatus according to various exemplary embodiments.
FIG. 17 illustrates a plan view of a display apparatus according to another exemplary embodiment.
FIG. 18 illustrates a sectional view of a display apparatus according to another exemplary embodiment.
FIG. 19 illustrates a plan view of a display apparatus according to another exemplary embodiment.
FIG. 20 illustrates a sectional view of a display apparatus according to another exemplary embodiment.
FIG. 21 illustrates a graph illustrating a relationship between external pressure and pressure received by a spacer.
FIG. 22 illustrates a magnification illustrating region A of FIG. 20.
FIGS. 23 and 24 illustrate magnifications illustrating region B of FIG. 20.
FIGS. 25 and 26 illustrate sectional views of a display apparatus according to various exemplary embodiments.

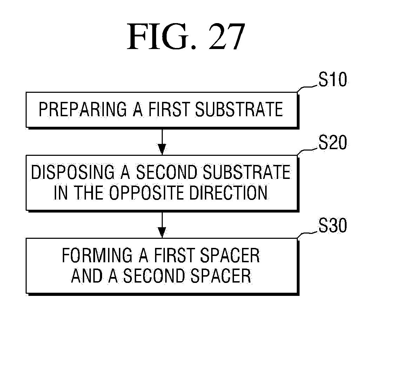

FIG. 27 illustrates a flow chart illustrating a method for manufacturing a display apparatus according to an exemplary embodiment.

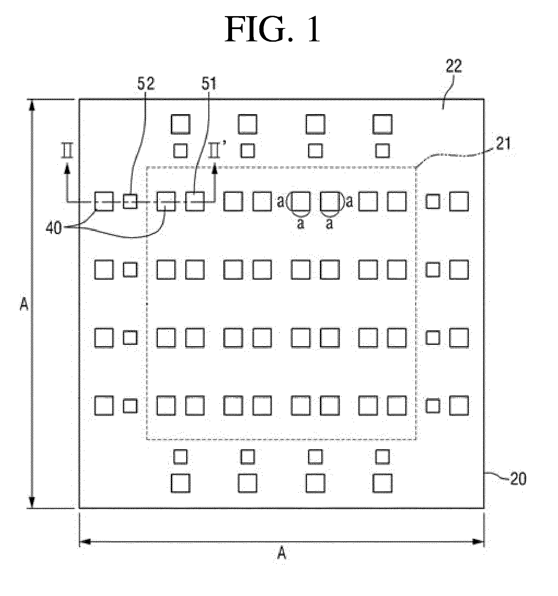

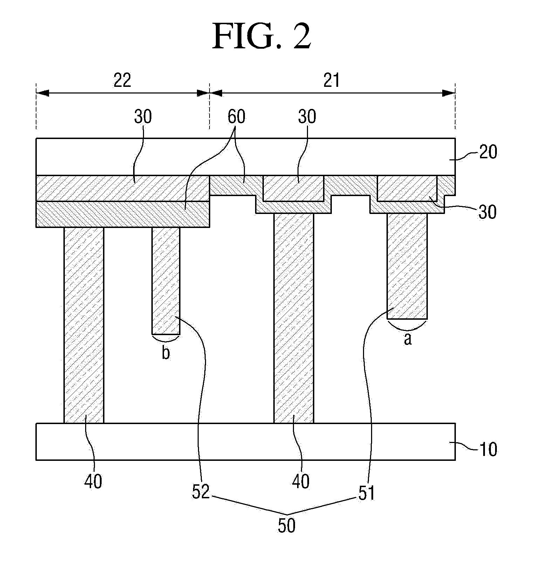

Referring to FIGS. 1 and 2, a display apparatus includes a first display panel, a second display panel and a plurality of spacers arranged between the first display panel and the second display panel. The first display panel and second display panel are disposed opposite one another, and a gap between the first display panel and the second display panel is maintained by at least one spacer.

The first display panel and second display panel may include a first insulating substrate 10 and a second insulating substrate 20, respectively. For example, the first insulating substrate 10 and the second insulating substrate 20 may be made of glass or transparent plastic, respectively. In some implementations, either the first insulating substrate 10 or the second insulating substrate 20 may be made of an opaque material.

The first display panel and second display panel may include a first region 21 and a second region 22 surrounding the first region 21, respectively. The first region 21 occupies the central part of each substrate, and the second region 22 occupies the periphery of each substrate. The first region 21 includes a region that displays an image, while the second region 22 may be a region that does not display an image.

The first region 21 of the first display panel and second display panel may include a plurality of pixel regions. Each pixel region of the first display panel may correspond to each pixel region of the second display panel. The pixel regions define a plurality of pixel domains spatially. A pixel region (or a pixel domain) may be arranged in a matrix form on a flat surface.

A plurality of microdiodes may be formed on the first insulating substrate 10 of the first display panel. Although not shown, at least one insulating film or an insulating pattern, at least one conductive film or a conductive pattern and/or a semiconductor layer or a semiconductor pattern may be formed on one surface of the first insulating substrate 10.

At least one insulating film or an insulating pattern, described hereinbefore, may include a gate insulating film, an interlayer insulating film, a passivation film and the like.

At least one conductive film and/or a conductive pattern, described hereinbefore, may include a gate line, a gate electrode, a sustain electrode, a data line, a source electrode, a drain electrode and a pixel electrode.

A pixel electrode may be disposed in each pixel region of the first region 21 of the first display panel. A gate electrode, a source electrode and a drain electrode together with a semiconductor pattern may form a plurality of thin film transistors. Each thin film transistor being connected to a pixel electrode may control the application of pixel voltage by a pixel electrode.

Pads of a gate line or a data line may be disposed in the second region 22 of the first display panel. Furthermore, driving units for applying voltage to a gate line and/or a data line may be disposed in the second region 22 of the first display panel.

A colour filter 60, including a dummy portion in the second region 22, a black matrix 30, including a peripheral portion in the second region, and the like may be formed on the second insulating substrate 20 of the second display panel.

Specifically, a plurality of colour filters 60 may be displayed in each pixel region of the first region 21 of the second display panel. A single colour filter represents one colour, and a plurality of colour filters 60 may include colour filters representing more than one colour. For example, a plurality of colour filters 60 may include a red colour filter, a green colour filter and a blue colour filter. Each colour filter representing each colour may be arranged repeatedly and alternately.

The black matrix 30, disposed in a boundary between pixel regions of the second display panel, may define a pixel region. In a laminated structure, the colour filter 60 may be an upper laminated film with respect to the black matrix 30 based on a second display panel. For such a structure, the periphery of each colour filter, as shown in FIG. 2, may partially expand to overlap onto the black matrix 30. However, the thickness of the periphery of the colour filter 60 overlapping the black matrix 30 may be smaller than the thickness of the colour filter 60 in a pixel region due to the leveling effect.

A peripheral portion of the black matrix 30 may be disposed in the second region 22 of the second display panel. The peripheral portion of the black matrix 30 may be formed of the same substance and/or in the same thickness as the black matrix 30 in a pixel region. However, the width of a peripheral portion of the black matrix 30 may be thicker than that of the black matrix 30 in a pixel region. In some exemplary embodiments, the peripheral portion of the black matrix 30 may be formed to cover an entire surface of the second region 22.

A dummy portion of the colour filter 60 may be formed on the peripheral portion of the black matrix 30. The dummy portion of the colour filter 60 and the colour filter 60 in the pixel region may be made of the same substance. The dummy portion of the colour filter 60, for example, may be one of a red colour filter, a green colour filter and a blue colour filter. Taking another example, a dummy portion of the colour filter 60 may include more than one of a red colour filter, a green colour filter and a blue colour filter, while each colour filter may be disposed adjacent to one another within the same layer.

The thickness of a dummy portion of the colour filter 60 may be equal to the thickness of the colour filter 60 in the pixel region, and that thickness may be, as aforementioned, greater than the thickness of the periphery of the colour filter 60 that overlaps onto the black matrix 30. The distance from the second insulating substrate 20 to the surface of the dummy portion of the colour filter 60 of the second region 22 may be greater than the distance from the second insulating substrate 20, not only to the surface of the colour filter 60 in a pixel region, but also to the surface of the periphery of the colour filter 60. That is, the surface of the dummy portion of the colour filter 60 may be the farthermost place from a second insulating substrate 20 among a group comprised of a black matrix 30, a peripheral portion of the black matrix 30, a colour filter 60 and a dummy portion of the colour filter 60. Assuming that a first display panel is disposed in parallel with a second display panel, the clearance distance from a first display panel to the surface of a dummy portion of the colour filter 60 may be the shortest among the aforementioned group.

A plurality of spacers may be positioned between a first display panel and a second display panel. When further pressure is not applied, except for pressure from the assembly of a first display panel and a second display panel, the plurality of spacers may include one or more first spacers 40 being in contact with a first display panel and a second display panel, respectively, and one or more second spacers 50 being in contact with one of a first display panel and a second display panel and spaced apart from the other.

The first spacer 40 and the second spacer 50 may be column spacers. Examples of a column spacer may include a cylindrical spacer or a multi-angular column spacer. The first spacer 40 and the second spacer 50 may have an even size and shape regardless of a cross section which is cut by a flat surface (plane). However, in another implementation, the first spacer 40 and the second spacer 50 may have a different shape or size corresponding to a cross section.

The first spacer 40 and the second spacer 50 may include an organic photosensitive substance and the like. The first spacer 40 and the second spacer 50 may include the same substance, or, as mentioned below, the first spacer 40 and the second spacer may include different substances, considering that their functions are different. For example, the substance of the second spacer 50 may be harder than that of the first spacer 40.

One end of the first spacer 40 may be attached to or adhered to one of the first display panel and the second display panel. The other end of the first spacer 40 may simply be in contact with the other of the two display panels, rather than being attached to it. FIG. 2 exemplifies a case in which the first spacer 40 is formed on the second display panel, thereby attaching its one side to the second display panel and its other side is simply in contact with the first display panel. The first spacer 40 may play a role of maintaining a cell gap between the first display panel and the second display panel as a first space, when no further pressure is applied except for pressure from the assembly of the first display panel and the second display panel.

One or more first spacers 40 may be disposed in the first region 21 and the second region 22 of the second display panel, respectively.

The first spacer 40 of the first region 21 may be disposed to overlap the black matrix 30. In the first region 21, the first spacer 40 may be disposed right above the black matrix 30, but when the periphery of the colour filter 60 is overlapped on the black matrix 30, the first spacer 40 is disposed on the periphery of the colour filter 60.

The first spacer 40 of the second region 22 may be disposed to overlap the peripheral portion of the black matrix 30. In some exemplary embodiments, as the dummy portion of the colour filter 60 is disposed on the peripheral portion of the black matrix 30 in the second region 22, the first spacer 40 may be disposed on the dummy portion of the colour filter 60.

Assuming the surface of the first display panel is flat and even, the clearance distance between the surface of the dummy portion of the colour filter 60 of the second region 22 of the second display panel and the first display panel may be smaller than the clearance distance between the colour filter 60 or the surface of the periphery of the colour filter 60 of the first region 21 and the first display panel. Accordingly, the length of the first spacer 40 disposed in the second region 22 may be smaller the length of the first spacer 40 disposed in the first region 21.

One or more second spacers 50 may be disposed in the first region 21 and the second region of the second display panel, respectively. The second spacer 50 and the first spacer 40 may be disposed in a similar manner. That is, in the first region 21, the second spacer 50 may be disposed on the black matrix 30 or on the colour filter 60, and the second spacer 50 may be disposed on the peripheral portion of the black matrix 30 or on the dummy portion of the colour filter 60.

Regardless of the first region 21 and the second region 22, the length of the second spacers 50 may be equal. As aforementioned, the distance between the dummy portion of the colour filter 60 of the second region 22 and the first display panel may smaller than the distance between the periphery of the colour filter 60 of the first region 21 and the first display panel. Accordingly, the clearance distance between the other end of the second spacer 50 and the first display panel may be smaller in the second region 22 than in the first region 21.

When no further pressure is applied except for pressure corresponding to the assembly of the first display panel and the second display panel, the second spacer 50 becomes spaced apart from the first display panel, but, with further pressure applied, the other end in contact with the first display panel may play a role of maintaining a cell gap of the first display panel and the second display panel as a second space (smaller than a first space). Here, the first spacer 40 may contract by receiving predetermined stress. Compression stress of the spacers is described below.

In some exemplary embodiments, the total sum of the cross sectional areas of the first spacers 40 of the first region 21 may be equal to that of the first spacer 40 of the second region 22. (Herein, a cross-sectional area of a spacer may be defined according to a flat cut through the spacer parallel with the second insulating substrate 20, in other words the intersection of the spacer with a plane parallel to the substrate.) If the total sum of the cross sectional areas is equal to the cross sectional areas of the first spacer 40 regardless of the first region 21 and the second region 22 of the second display, the aforementioned relationship may be realized by placing the same number of first spacers 40 in the first region 21 and the second region 22

In some exemplary embodiments, the sum of the cross sectional areas of the first spacers 40 of the first region 21 may be less than 4% of the total area of the surface of the second display panel, i.e., the sum of the areas of the first region 21 and the second region 22.

Taking another example, if an occupied area is defined as a projected area when the first spacer 40 is projected on the second insulating substrate 20, the sum of the projected areas of the first spacers 40 of the first region 21 may be equal to the sum of a projected areas of the first spacers 40 of the second region 22. Regardless of a surface that is cut flat, when the first spacer 40 is a column spacer with an even cross section, this has a meaning similar to the aforementioned exemplary embodiment.

In some exemplary embodiments, the total sum of the cross sectional areas of the first spacers 40 of the first region 21, which is cut flat in parallel with the second insulating substrate 20, may be greater than the total sum of the cross sectional areas of the first spacers 40 of the second region 22 which is cut flat by the same flat surface. If the sum of a cross sectional areas is equal to cross sectional areas per first spacers 40 regardless of the first region 21 and the second region 22, the aforementioned relationship may be realized by placing the same number of first spacers 40 in the first region 21 and the second region 22.

In some exemplary embodiments, the sum of the cross sectional areas of the first spacers 40 of the first region 21 may be less than 4% of the sum of the total area of the one surface of the second display panel. In some exemplary embodiments, the sum of a cross sectional areas of the first spacers 40 of the first region 21 may be approximately 0.1% of the total area of the one surface of the second display panel, and the sum of the cross sectional areas of the first spacers 40 of the second region 22 may be approximately 0.05% of the total area of the one surface of the second display panel. In some exemplary embodiments, the total sum of the cross sectional areas of the second spacers 51 of the first region 21 which is cut flat in parallel with the second insulating substrate 20 may be greater than the total sum of the cross sectional areas of the second spacers 52 of the second region 22, which is cut flat by the same flat surface. If the number of second spacers 51,52 of the first region 21 is equal to that of second spacers 51, 52 of the second region 22, the aforementioned relationship, for example, can be realized by making the cross sectional area of the second spacer 51 of the first region 21 greater than the cross sectional area of the second spacer 52 of the second region 22 (a>b).

If the total sum of the cross sectional areas of the second spacers 52 of the second region 22 is relatively small, the bending of display panels and the appearance of a strain of the display image may be alleviated. More specifically, when the first display panel and the second display panel are further pressurized due to an artificial press and the like, the first spacers 40 may contract, thereby reducing the gap between the first display panel and the second display panel. Here, based on the first display panel, as the clearance distance from the other end of the second spacers 52 of the second region is smaller than the other end of the second spacers 51 of the first region, the other end of the spacers 52 in the second region 22 is highly likely to be first in contact with the first display panel. When the other end of the second spacers 51 of the first region 21 comes into contact with the first display panel due to continuous pressure, the second spacer 52 of the second region may be continuously pressurized, thereby receiving excessive compression stress. If the second spacer 50 is hard, the second spacer 52 of the second region 22 may not be able to further reduce clearance due to pressure. In this case, a cell gap of the second region 22 may become greater than the cell gap of the first region 21, thereby bending the first display panel and/or the second display panel. Furthermore, in corresponding to the bending of the first display panel and/or the second display panel, the direction of light incidence or the position of liquid crystal molecules may change, thereby producing a strain of the display image.

Like this exemplary embodiment, although the number of second spacers 51 of the first region is equal to the number of second spacers 52 of the second region 22, if the cross sectional area per second spacer of the second region 22 is smaller than in the first region 21, the absolute hardness of the second spacers 52 of the second region 22 decreases, and thereby the degree that the second spacers 52 of the second region 22 are bending the first display panel and/or the second display panel corresponding to pressure may be reduced. Accordingly, a strain of a display image may be alleviated.

As another exemplary embodiment, when an occupied area, such as when the second spacers 50 is projected onto the second insulating substrate 20, is defined as a projected area, the total sum of the projected area of the second spacers 51 of the first region 21 may be greater than the total sum of the projected area of the second spacers 52 of the second region 22. Thus, if the second spacers 50 are column spacers that have an even cross section regardless of a cut surface, the total sum of the projected area may have a meaning similar to the total cross sectional area in the aforementioned exemplary embodiment. As another exemplary embodiment from a similar perspective, when no further pressure is applied, the total sum of the area of the other end of the second spacers 51 of the first region may be greater than the total sum of the area of the other end of the second spacers 52 of the second region 22.

In some exemplary embodiments, the sum of the cross sectional area of the second spacers 51 of the first region 21 may be less than 7% of the area of one surface of the second display panel.

If a display apparatus according to one exemplary embodiment is applied as a liquid crystal display apparatus, a liquid crystal layer (not shown) may be positioned within the space between the first display panel and the second display panel where a cell gap is maintained by the first spacers 40 and the second spacers 50.

A display apparatus according to one exemplary embodiment, also, may further include a seal member (not shown) between the first display panel and the second display panel in order to seal the inside of a display apparatus.

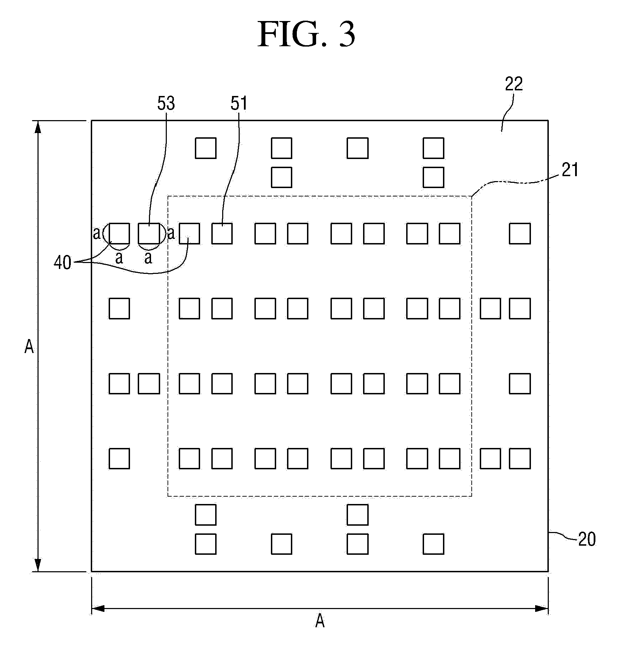

Referring to FIG. 3, the total sum of the cross sectional areas of the second spacers 51 of the first region 21, which are cut flat in parallel with a second insulating substrate 20, may be greater than the total sum of the cross sectional area of the second spacer 53 of the second region 22, which are cut flat by the same flat surface. As shown in FIG. 3, assuming the sum of the cross sectional areas of second spacers 51,53 are equal to one another regardless of the first region 21 and the second region 22, for example, if the cross section of the second spacers 51, 53 of the first region 21 and the second region 22 is a square, and the length of one side is identically equal to a, the aforementioned relationship may be realized, for example, by making the number of the second spacers 53 of the second region 22 smaller than the number of the second spacer 51 of the first region 21.

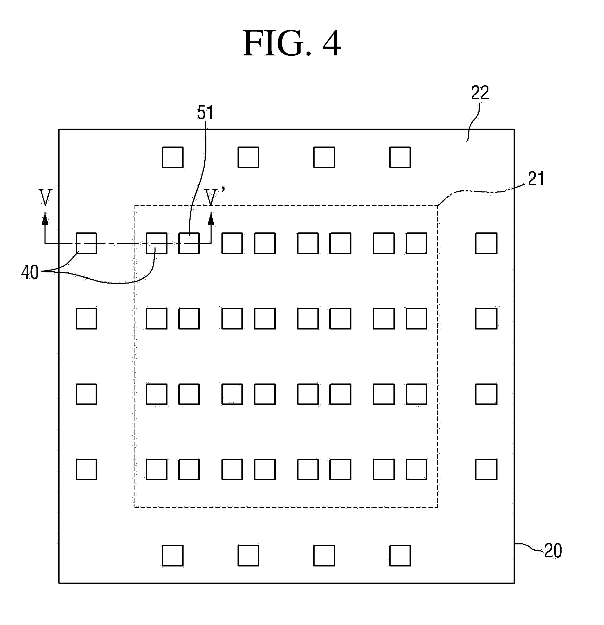

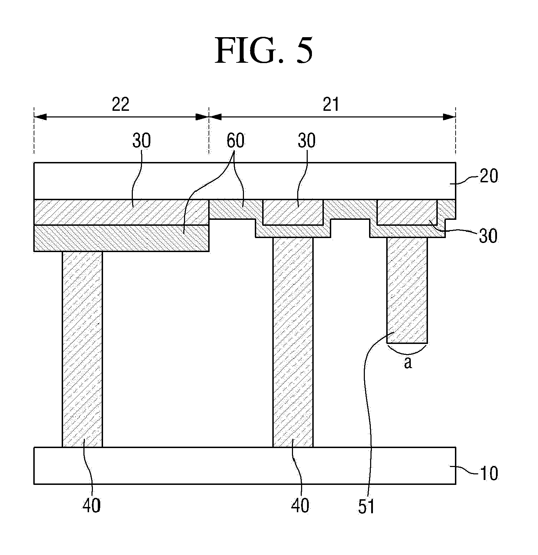

Referring to FIGS. 4 and 5, the sum of the cross sectional areas of the second spacers of the second region 22 may be zero. The aforementioned relationship may be realized, for example, by not forming a second spacer in the second region 22, as shown in FIGS. 4 and 5. The embodiment of FIGS. 4 and 5 is similar to that of FIGS. 1 and 2, except that the sum of the cross sectional area of the second spacer of the second region 22 is zero, the description of other structures is omitted.

By not forming a second spacer of the second region 22, the primary cause that triggers a gap high phenomenon can be eliminated. Accordingly, a strain of the display image, which may appear corresponding to the bending of the first display panel and/or the second display panel, can be alleviated.

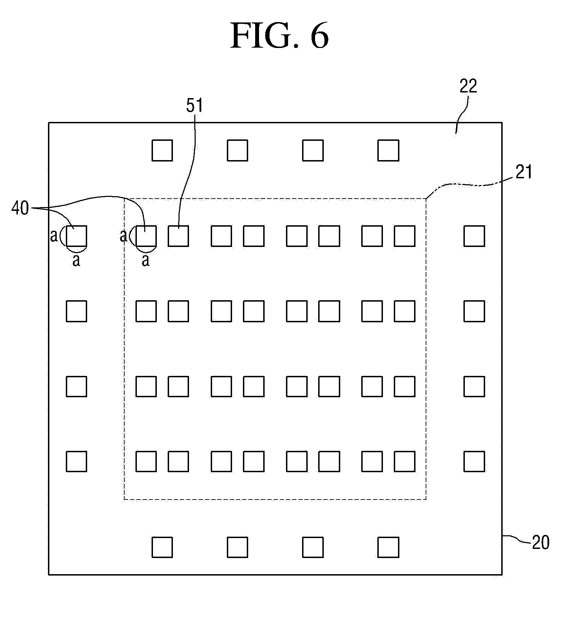

Referring to FIG. 6, the total sum of the cross sectional areas of the first spacers 40 of the first region 21, which are cut flat in parallel with the second insulating substrate 20, may be equal to the total sum of the cross sectional areas of a first spacers 40 of the second region 22, which are cut flat by the same flat surface. Assuming cross sectional areas of the first spacers 40 are equal, respectively, regardless of the first region 21 and the second region 22, for example, if a cross section of the first spacers 40 of the first region 21 and the second region 22 is a square, and the length of one side is identically equal to a, the aforementioned relationship may be realized, for example, by placing the same number of first spacers 40 in the first region 21 and the second region 22.

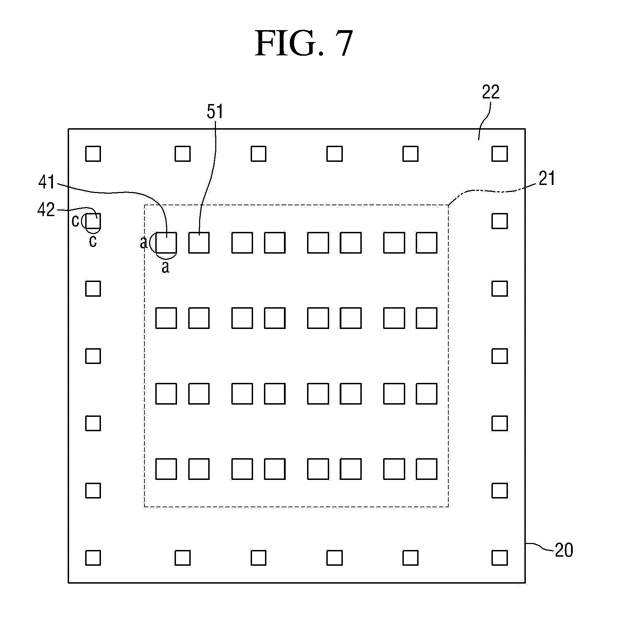

Referring to FIG. 7, the total sum of the cross sectional areas of the first spacers 41 of the first region 21, which are cut flat in parallel with the second insulating substrate 20, may be equal to the total sum of the cross sectional area of the first spacers 42 of the second region 22, which are cut flat by the same flat surface. If the cross sectional areas of each first spacer 41 of the first region 21 is greater than that of each first spacer 42 of the second region 22, for example, if a cross section of the first spacer 41, 42 of the first region 21 and the second region 22 is a square, and the length of one side of the first spacer 41 of the first region 21 is greater than that of the first spacer 42 of the second region 22 (a>c), the aforementioned relationship may be realized, for example, by

making the number of first spacers 42 of the second region 22 greater than that of first spacers 41 of the first region 21.

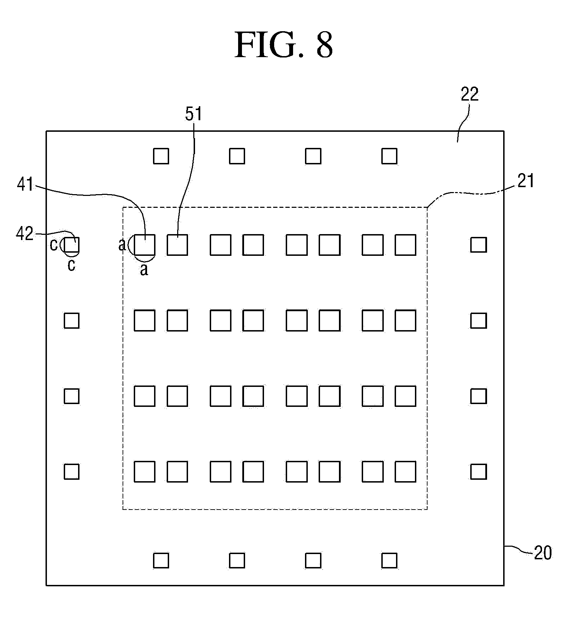

Referring to FIG. 8, the total sum of the cross sectional areas of the first spacers 41 of the first region 21, which are cut flat in parallel with the second insulating substrate 20 may be equal to the total sum of the cross sectional area of the first spacers 42 of the second region 22, which are cut flat by the same flat surface. Assuming the cross sectional areas of each first spacer 41 of the first region 21 is equal to that of each first spacer 42 of the second region 22, the aforementioned relationship may be realized, for example, by making the cross sectional area of each first spacer 41 of the first region 21 greater than that of each first spacer 42 of the second region 22. For example, as shown in FIG. 8, this may be realized, for example, when a cross section of the first spacers 41, 42 of the first region 21 and the second region 22 is a square, and by making the length of one side of the first spacer 41 of the first region 21 greater than that of the first spacer 42 of the second region 22 (a>c).

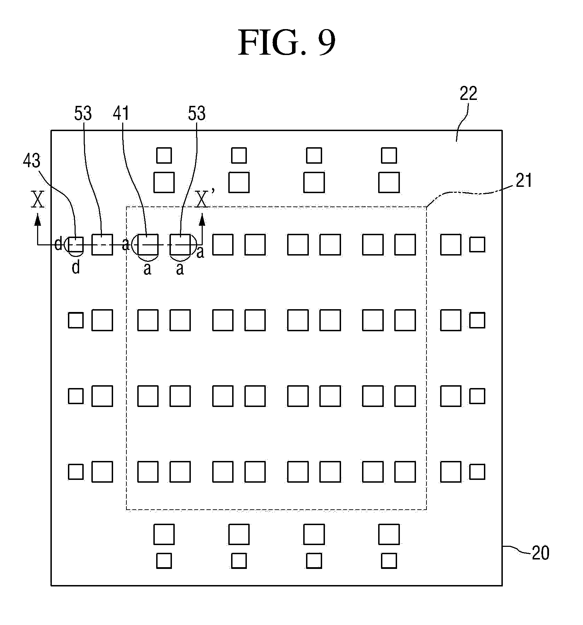

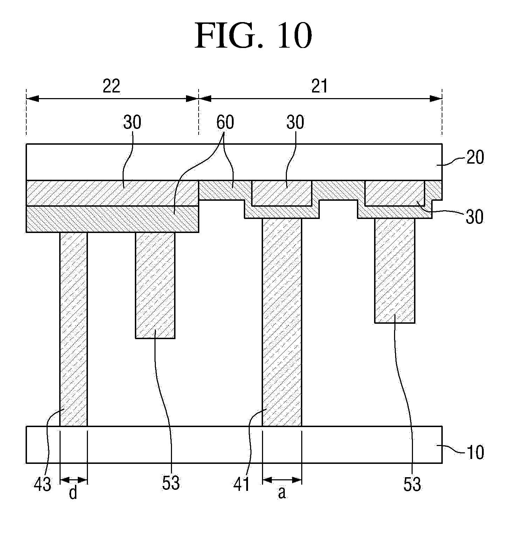

Referring to Figs. 9 and 10, a display apparatus includes a first display panel, a second display panel and a plurality of spacers positioned between the first display panel and the second display panel. As the first display panel, second display panel and plurality of spacers are similar to the first display panel, the second display panel and a plurality of spacers in FIGS. 1 and 2, the description of similar structures is not repeated.

Referring to FIGS. 9 and 10, the total sum of the cross sectional area of the first spacers 41 of the first region 21, which are cut flat in parallel with the second insulating substrate 20, may be greater than the total sum of the cross sectional area of the first spacer 43 of the second region 22, which are cut flat by the same flat surface. Assuming the number of first spacers 41 of the first region 21 is equal to the number of first spacers 42 of the second region 22, the aforementioned relationship may be realized, for example, by making the cross sectional area of each first spacer 41 of the first region 21 greater than that of each first spacer 43 of the second region 22. For example, as shown in Figs. 9 and 10, this may be realized, for example, when the cross section of the first spacers 41,43 of the first region 21 and the second region 22 is a square, and by making the length of one side of the first spacer 41 of the first region 21 greater than that of the first spacer 43 of the second region 22 (a>c). In some exemplary embodiments, the sum of the cross sectional areas of the first spacers 41 of the first region 21 may be less than 4% of the area of one surface of the second display panel. The total sum of the cross sectional areas of the second spacers 53 of the first region 21, which are cut flat in parallel with the second insulating substrate 20, may equal to the total sum of the cross sectional areas of the second spacers 53 of the second region 22, which are cut flat by the same flat surface. Assuming the number of the second spacers 53 of the first region 21 is equal to that of the first spacer 53 of the second region 22, the aforementioned relationship may be realized, for example, by making the cross sectional area of each second spacer 53 of the first region 21 equal to that of the second spacers 53 of the second region 22. For example, as shown in Figs. 9 and 10, this may be realized, for example, when the cross section of the second spacer 53 of the first region 21 and the second region 22 is a square, and by making the length of one side of the second spacer 53 of the first region 21 equal to that of the second spacer 53 of the second region 22. In some exemplary embodiments, the sum of the cross sectional areas of second spacers 53 of the first region 21 may be less than 7% of the area of one surface of the second display panel.

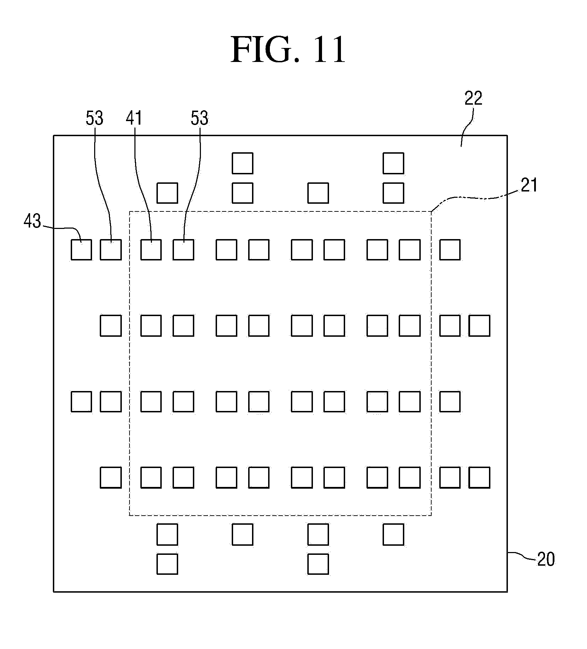

Referring to FIG. 11, the total sum of the cross sectional areas of the first spacers 41 of the first region, which are cut flat in parallel with the second insulating substrate 20, may be greater than that of the first spacers 43 of the second region 22 which are cut flat by the same flat surface. As shown in FIG. 11, assuming that the cross sectional area of the first spacers 41, 43 is equal regardless of the first region 21 and the second region 22, for example, if the cross section of the first spacers 41, 43 of the first region 21 and the second region 22 is a square, and the length of one side is equal, the aforementioned relationship may be realized, for example, by making the number of first spacers 43 of the second region 22 smaller than the number of first spacers 41 of the first region 21.

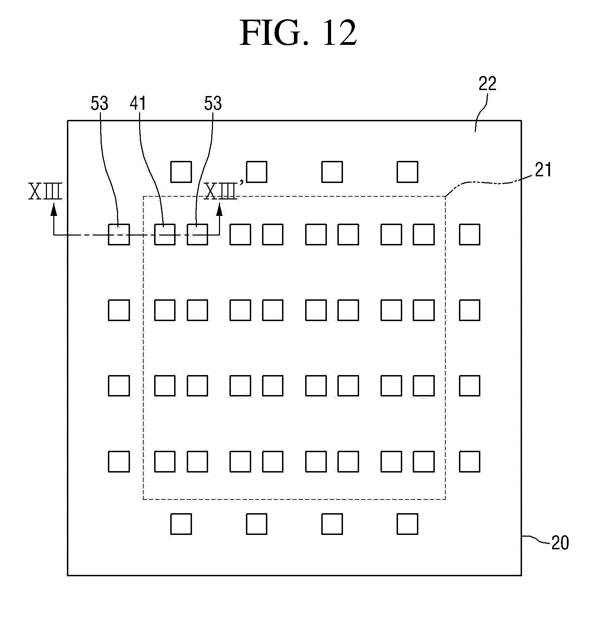

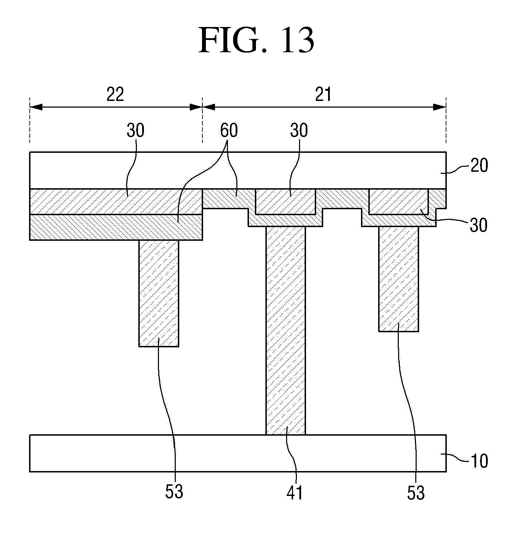

Referring to FIGS. 12 and 13, the sum of the cross sectional area of the first spacers of the second region 22 may be zero. As shown in FIGS. 12 and 13, the aforementioned relationship may be realized, for example, by not forming a first spacer in the second region 22. The description of other structures is similar to that of FIGS. 1 and 2, except that the sum of the cross sectional area of the first spacer is zero. Therefore, a description of similar features is not repeated.

By not forming a first spacer of the second region 22, a margin may be secured for both a gap high phenomenon and a gap low phenomenon. Accordingly, a strain of the display image appearing corresponding to the bending of a first display panel and/or the second display panel may be alleviated.

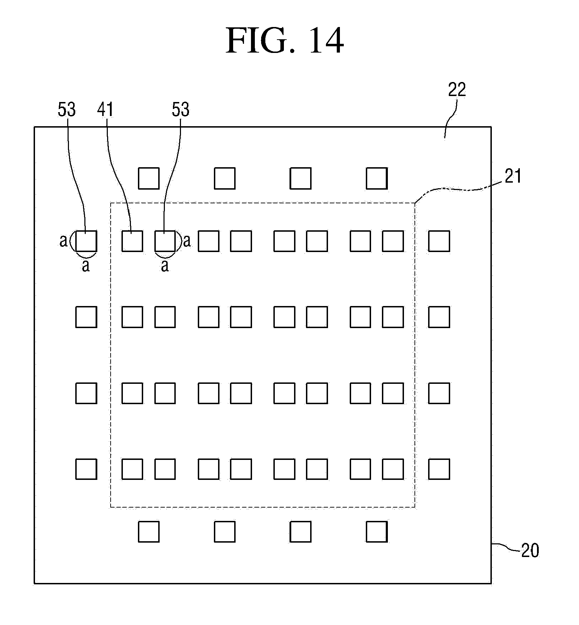

Referring to FIG. 14, the total sum of the cross sectional areas of the second spacers 53 of the first region, which are cut flat in parallel with the second insulating substrate 20, may be equal to that of the second spacers 53 of the second region 22, which are cut flat by the same flat surface. Assuming that the cross sectional areas of the second spacers 53 are equal regardless of the first region 21 and the second region 22, respectively, for example, if the cross section of the second spacers 53 of the first region 21 and the second region 22 is a square, and the length of one side is identically equal to a, the aforementioned relationship may be realized, for example, by placing the same number of second spacer 53 in the first region 21 and the second region 22.

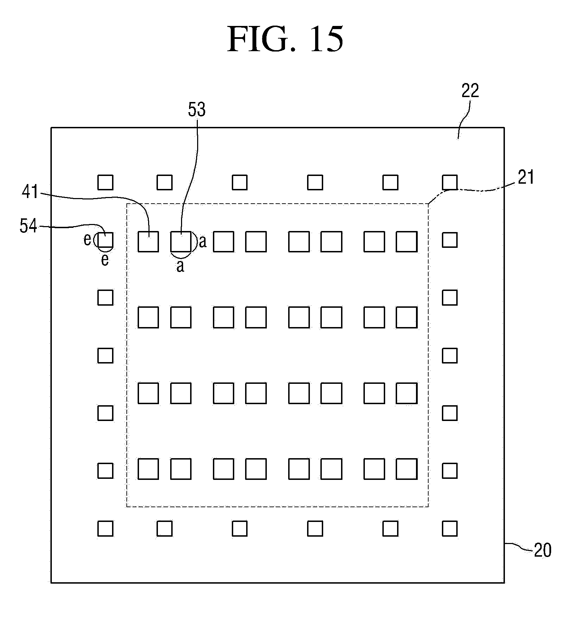

Referring to FIG. 15, the total sum of the cross sectional areas of the second spacers 53 of the first region, which are cut flat in parallel with the second insulating substrate 20 may be equal to that of the second spacer 54 of the second region 22, which are cut flat by the same flat surface. Assuming the cross sectional area of each second spacer 53 of the first region 21 is greater than that of each second spacer 54 of the second region 22, for example, if the cross section of the first spacers 53, 54 of the first region 21 and the second region 22 is a square, and the length of one side of the cross section of the second spacer 53 of the first region 21 is greater than that of the second spacer 54 of the second region 22 (a>e), the aforementioned relationship maybe realized, for example, by making the number of the second spacers 54 of the second region 22 greater than that of the second spacers 53 of the first region 21.

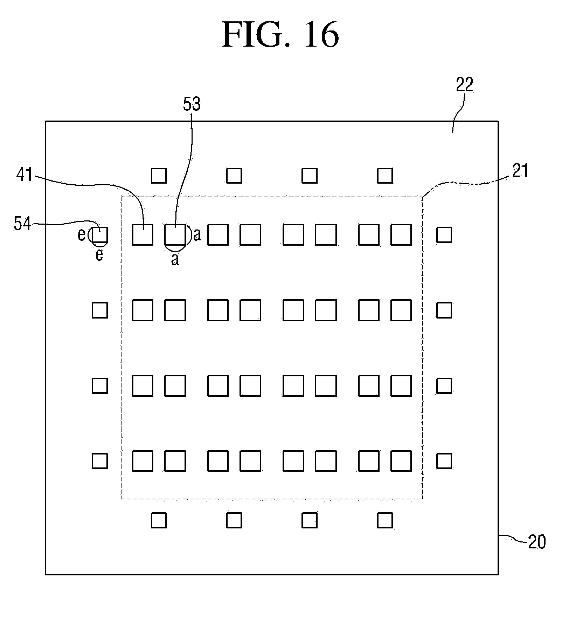

Referring to FIG. 16, the total sum of the cross sectional areas of the second spacers 53 of the first region, which are cut flat in parallel with the second insulating substrate 20, may be greater than that of the second spacers 54 of the second region 22 which is cut flat by the same flat surface. Assuming that the number of the second spacers 53 of the first region 21 is equal to that of the second spacers 54 of the second region 22, the aforementioned relationship, may be realized, for example, by making the cross sectional area of each second spacer 53 of the first region 21 larger than that of each second spacer 54 of the second region 22. For example, as shown in Fig. 16, this may be realized when the cross section of the second spacers 53, 54 of the first region 21 and the second region 22 is a square, and by making the length of one side of the cross section of the second spacer 53 of the first region 21 greater than that of the second spacer 54 of the second region 22 (a>e). In some exemplary embodiments, the total sum of the cross sectional areas of the second spacers 53 of the first region 21 may be less than 7% of the total area of the one surface of the second display panel.

In some exemplary embodiments, the total sum of the cross sectional areas of the second spacers 53 of the first region 21 may be approximately 3.9% of the total area of the one surface of the second display panel, and the total sum of the cross sectional areas of the second spacers 54 of the second region 22 may be approximately 2% of the total area of the one surface of the second display panel.

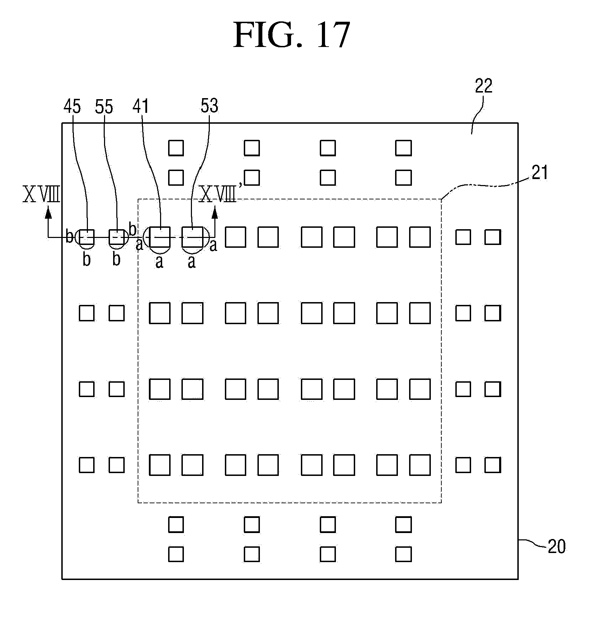

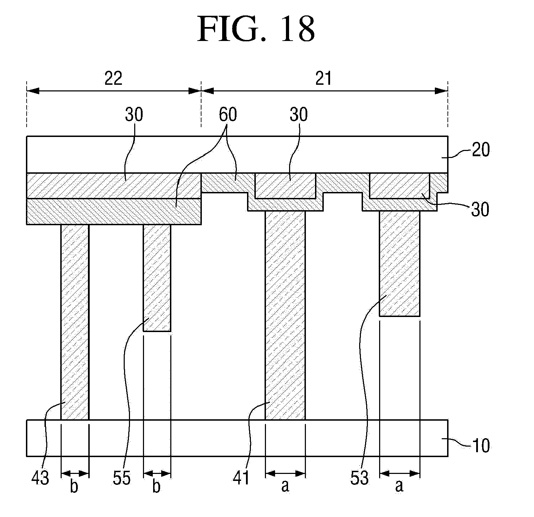

Referring to FIGS. 17 and 18, a display apparatus includes a first display panel, a second display panel and a plurality of spacers positioned between the first display panel and the second display panel. As the first display panel, second display panel and plurality of spacers are similar to those of the first display panel, the second display panel and the plurality of spacers in FIGS. 1 and 2, a description of similar features is not repeated.

The total sum of the cross sectional areas of the first spacers 41 of the first region 21, which are cut flat in parallel with the second insulating substrate, may be greater than that of the first spacer 45 of the second region 22, which are cut flat by the same flat surface. Assuming that the number of the first spacers 41 of the first region is equal to that of the first spacers 45 of the second region 22, the aforementioned relationship may be realized, for example, by making the cross sectional area of each first spacer 41 of the first region 21 greater than that of each first spacer 45 of the second region 22. For example, as shown in FIGS. 17 and 18, this may be realized when the cross section of the first spacers 41, 45 of the first region 21 and the second region 22 is a square, and by making the length of one side of the cross section of the first spacer 41 of the first region 21 greater than that of the first spacer 45 of the second region 22 (a>b).

The total sum of the cross sectional areas of the second spacers 53 of the first region 21, which are cut flat in parallel with the second insulating substrate 20, may be greater than that of the second spacers 55 of the second region, which are cut flat by the same flat surface. Assuming that the number of the second spacers 53 of the first region 21 is equal to that of the second spacers of the second region 22, the aforementioned relationship may be realized, for example, by making the cross sectional area of the second spacer 53 of the first region 21 greater than that of the second spacer 55 of the second region 22. For example, as shown in FIGS. 17 and 18, this may be realized when the cross section of the second spacers 53, 55 of the first region 21 and the second region 22 is a square, and by making the length of one side of the cross section of the second spacer 53 of the first region 21 greater than that of the second spacer 55 of the second region 22 (a>b).

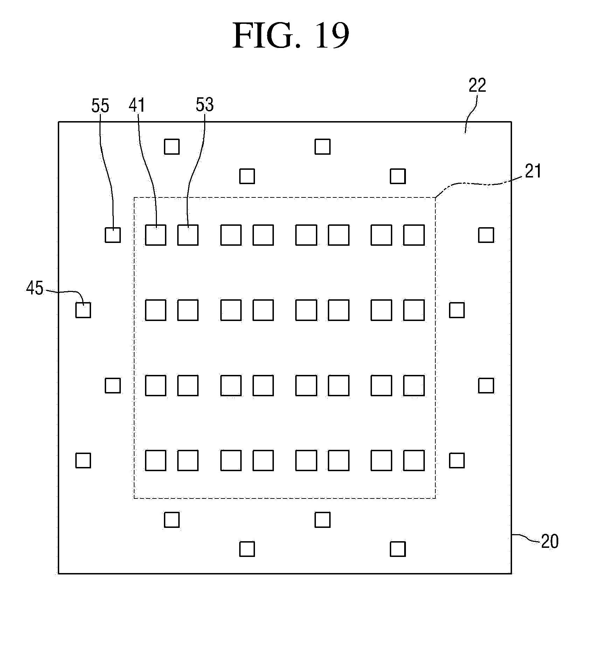

Referring to Fig. 19, except that the number of the first spacers 41 of the first region 21 is greater than that of the first spacers 45 of the second region 22, and the number of the second spacers 53 of the first region 21 is greater than that of the second spacers 55 of the second region 22, as the description of other structures is similar to that of FIG. 17, a description of similar features is not repeated.

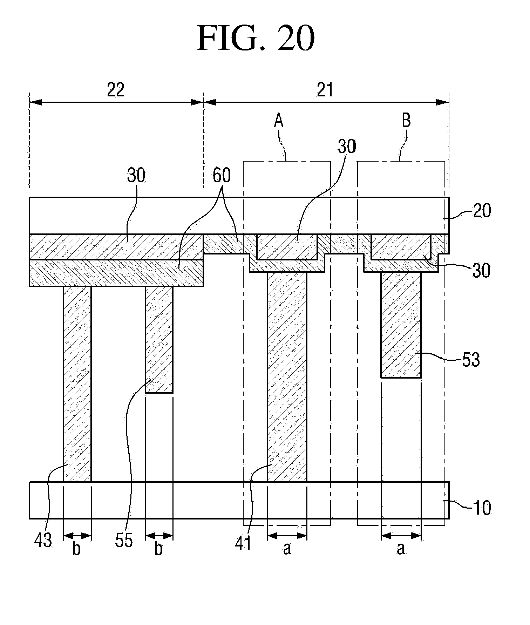

Referring to FIG. 20, a display apparatus includes a first display panel, a second display panel and a plurality of spacers positioned between the first display panel and the second display panel. As the first display panel, second display panel and plurality of spacers are similar to the first display panel, the second display panel and a plurality of spacers of FIG. 18, a description of similar features is not repeated.

The term "critical pressure value (Pth)" refers to the pressure value at a point when each spacer starts receiving actual pressure, when pressure is applied from the outside of a display apparatus, for example, if pressure is vertically applied from the first display panel and the second display panel. A critical pressure value (Pth2) of the second spacer 45 may be greater than a critical pressure value (Pth1) of the first spacer 41.

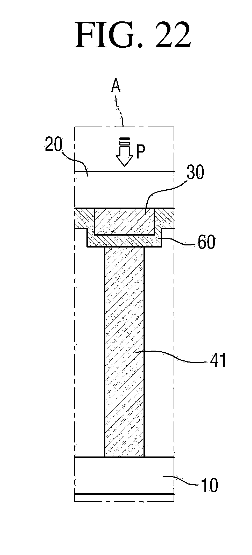

Referring to FIG. 22, one end of the first spacer 41 is attached to or adheres to the second display panel, and the other end of the first spacer 41 is in contact with the first display panel. Accordingly, when pressure is applied from the outside of the display apparatus, the first spacer may instantly receive compression stress and contract. That is, the first spacer 41 may receive pressure stress from the moment pressure is applied to the first display panel and the second display panel. Accordingly, a critical pressure value (Pth1) of the first spacer is zero.

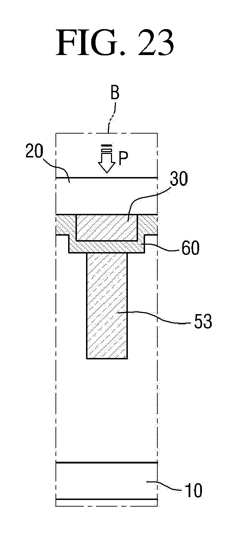

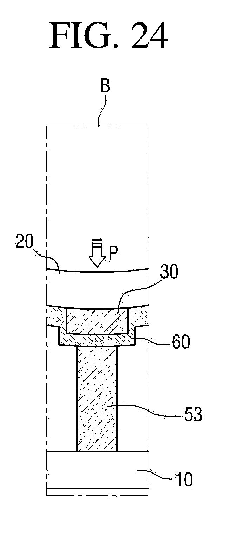

Referring to FIGS. 23 and 24, one end of the second spacer 53 is attached to or adheres to the second display panel, and the other end of the second spacer 53 is not in contact with the first display panel. Accordingly, when pressure is applied from the outside of the display apparatus, the second spacer 53 does not receive compression pressure until the second spacer 53 is in contact with the first display panel, and receives compression stress from the moment the second spacer 53 is in contact with the first display panel. Accordingly, the critical pressure value (Pth2) of the second spacer 53 is greater than zero.

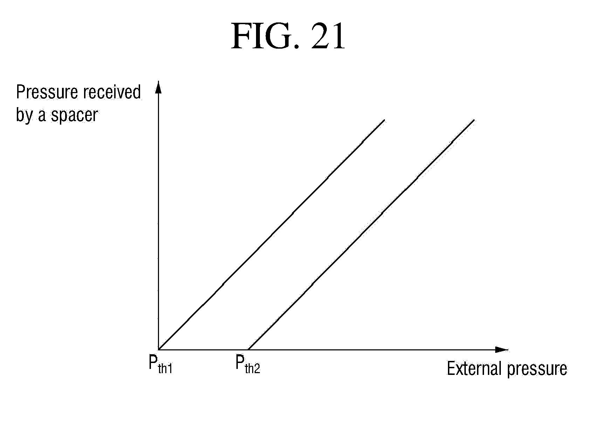

Referring to FIG. 21, the line on the left is a graph depicting a relationship between external pressure and pressure received by the first spacer 41, and the line on the right is a graph depicting a relationship between external pressure and pressure received by the second spacer 53. As aforementioned, as the first spacer 41 receives pressure stress from the moment pressure is applied from the first display panel and the second display panel, it is understood that the critical pressure value (Pth1) of the first spacer 41 is zero. Also, as aforementioned, as the second spacer 53 does not receive compression pressure from the moment pressure is applied from the first display panel and the second display panel until the second spacer 53 is in contact with the first display panel, the critical pressure value (Pth2) of the second spacer 53 is greater than zero.

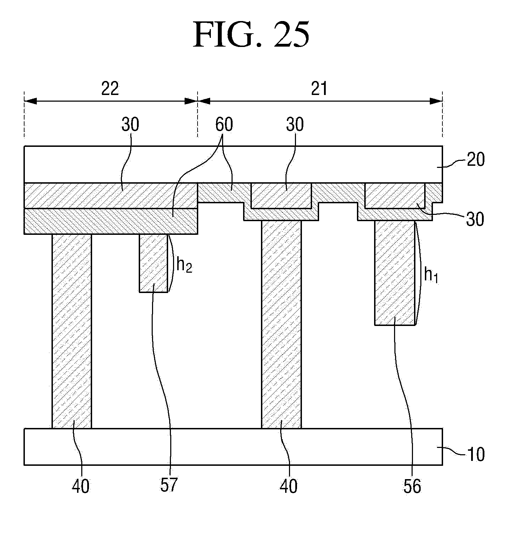

Referring to FIG. 25, except that the height(h2) of the second spacer 57 of the second region 22 is smaller than the height(h1) of the second spacer 56 of the first region 21, the description of other structures is similar to that of FIG. 2. A description of similar features is not repeated. A method for forming the height (h2) of the second spacer 57 of the second region to be smaller than the height (h1) of the second spacer 58 of the first region 21 is mentioned below.

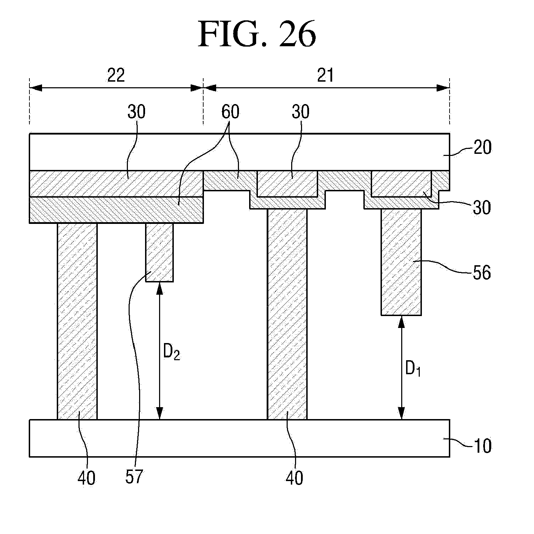

Referring to FIG. 26, as the description of other structures is similar to that of FIG. 2, except that the first spacer includes the other end opposite one surface of the second display panel, and the second spacer 56,57 may include the other end opposite one surface of the second display panel, and the clearance distance (D2) between the other end of the second spacer 57 of the second region 22 and the second display panel may be greater than the clearance distance (D1) between the other end of the second spacer 56 of the first region 21 and the second display panel, a description of similar features is omitted. A method for forming the clearance distance (D2) between the other end of the second spacer 57 of the second region 22 and the second display panel to be greater than the clearance distance (D1) between the other end of the second spacer 56 of the first region 21 and the second display panel is mentioned below.

A method for manufacturing a display apparatus according to this exemplary embodiment is to prepare a first display panel (S10).

As the first display panel is similar to the first display panel described in FIG. 1 or FIG. 26, a description of similar features is not repeated.

The second display panel including the first region and one surface having a second region surrounding the first region is disposed opposite the first display panel (S20). As the second display panel is similar to the second display panel described in FIG. 1 or FIG. 26, a description of similar features is not repeated.

One or more first spacers are formed in the first region of the second display panel and the second region to be in contact with the first display panel, and one or more second spacers are formed in the first region and the second region to be spaced apart from the first display panel (S30).

Forming the first spacer and the second spacer may include applying a photosensitive layer onto one surface of the second display panel, exposing the photosensitive layer by using a half-tone mask having different penetration rates for the first region and the second region, and removing part of the photosensitive layer after exposure. The exposure by using a half-tone mask having different penetration rates for the first region and the second region enables the height of the second spacer of the first region to be formed to be different from that of the second spacer of the second region, and enables a clearance distance from the second spacer of the first region and the first display panel to be formed to be different from that of the second spacer of the second region and the first display panel.

In some exemplary embodiments, a photosensitive layer may be made of a negative-type photosensitive substance. In this case, the penetration rate of a half-tone mask for the first region may be greater than that for the second region. For example, the penetration rate of the half-tone mask for the first region may be approximately 35%, and that for the second region may be 30%.

In another exemplary embodiment, a photosensitive layer may be made of a positive-type photosensitive substance, and in this case, the penetration rate of a half-tone mask for the first region may be smaller than that for the second region.

In a display apparatus according to exemplary embodiments and in a method of manufacturing the same, a gap high phenomenon, which is a chronic issue relating to yield decrease, may be prevented. Further, by applying a simple and readily applicable spacer design, a quality margin may be secured and a display apparatus that does not hamper the processability of mass production can be provided. Further, a condition of process for applying a process that uses an organic black matrix can be established, and errors can be brought under control.

However, the effects are not restricted to the one set forth herein. The above and other effects will become more apparent to one of daily skill in the art to which the present invention pertains by referencing the claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the invention as set forth in the following claims.

## Claims

1. A display apparatus, comprising:
a first display panel;
a second display panel opposite the first display panel, the second display panel including a surface having a first region and a second region, the second region surrounding the first region;
one or more first spacers in the first region of the second display panel, the one or more first spacers being in contact with the first display panel; and
one or more second spacers in the first region of the second display panel, the one or more second spacers being spaced apart from the first display panel.

2. The display apparatus as claimed in claim 1, wherein the one or more second spacers are further disposed in the second region of the second display panel,
wherein the sum of cross sectional areas of the second spacers in the second region is smaller than or equal to the sum of cross sectional areas of the second spacers in the first region.

3. The display apparatus as claimed in claim 1 or 2, wherein the second display panel includes:
a black matrix on a part of the surface of the second display panel in the first region and on a whole of the surface of the second display panel in the second region;
a colour filter on the surface of the second display panel and on the black matrix; and
a coating layer on the colour filter,
wherein the first spacers and the second spacers are between the coating layer and the first display panel.

4. The display apparatus as claimed in any one of the preceding claims, wherein the one or more first spacers are disposed in the second region of the second display panel.

5. The display apparatus of claim 4, wherein the sum of cross sectional areas of the first spacers in the first region is equal to the sum of cross sectional areas of the first spacers in the second region.

6. The display apparatus as claimed in any one of the preceding claims, wherein the sum of the cross sectional areas of the first spacers in the first region is less than 4% of the total area of the surface of the second display panel.

7. The display apparatus as claimed in claim 4, wherein the sum of cross sectional areas of the first spacers in the second region is smaller than the sum of cross sectional areas of the first spacers in the first region.

8. The display apparatus as claimed in any one of the preceding claims, wherein the sum of the cross sectional areas of the first spacers in the first region is less than 4% of a total area of the surface of the second display panel.

9. The display apparatus as claimed in any one of the preceding claims, wherein the sum of the cross sectional areas of the second spacers in the first region is less than 7% of a total area of the surface of the second display panel.

10. The display apparatus of claim 1, wherein the first spacers are disposed in the first region and the second region of the second display panel; and
the second spacers are disposed in the first region and the second region of the second display panel, wherein a critical pressure value of the second spacers is greater than a critical pressure value of the first spacers, the critical pressure value being a point at which a spacer starts receiving pressure when pressure is applied from the first display panel or the second display panel
wherein:
the sum of cross sectional areas of the first spacers in the second region is smaller than the sum of cross sectional areas of the first spacers in the first region, and
the sum of cross sectional areas of the second spacers in the second region is smaller than the sum of cross sectional areas of the second spacers in the first region.

11. A method of manufacturing a display apparatus, the method comprising:
providing a first display panel;
disposing a second display panel opposite the first display panel, the second display panel including a surface having a first region and a second region, the second region surrounding the first region; and
forming one or more first spacers in contact with the first display panel in the first region and the second region of the second display panel, and one or more second spacers spaced apart from the first display panel in the first region and the second region of the second display panel,
wherein the forming of the first spacers and the second spacers includes:
applying a photosensitive layer on the one surface of the second display panel,
exposing the photosensitive layer by using a half-tone mask that has different penetration rates for the first region and the second region, and
removing a portion of the photosensitive layer following the exposure.

12. The method for manufacturing a display apparatus as claimed in claim 11, wherein:
the photosensitive layer includes a negative-type photosensitive substance, and
a penetration rate of the half-tone mask for the first region is greater than a penetration rate of the half-tone mask for the second region.

13. The method for manufacturing a display apparatus as claimed in claim 12, wherein:
the penetration rate of the half-tone mask for the first region is 35%, and
the penetration rate of the half-tone mask for the second region is 30%.

14. The method for manufacturing a display apparatus as claimed in claim 11, wherein:
the photosensitive layer includes a positive-type photosensitive substance, and
a penetration rate of the half-tone mask for the first region is less than a penetration rate of the half-tone mask for the second region.
